# EUROPEAN PATENT SPECIFICATION

(11) **EP 3 637 368 B1**
(45) Date of publication and mention of the grant of the patent: **15.12.2021**
(21) Application number: 18813754.1
(22) Date of filing: 15.05.2018
(51) Int. Cl.: G06T 7/90, G06T 7/136, G06K 9/00, G06T 7/11, G06K 9/46

(54) **IMAGE PROCESSING DEVICE AND LIGHT DISTRIBUTION CONTROL SYSTEM**
BILDVERARBEITUNGSVORRICHTUNG UND LICHTVERTEILUNGSSTEUERUNGSSYSTEM
DISPOSITIF DE TRAITEMENT D'IMAGE ET SYSTÈME DE COMMANDE DE DISTRIBUTION DE LUMIÈRE

(30) Priority: 05.06.2017 JP 2017111211
(43) Date of publication of application: 15.04.2020
(73) Proprietor: Hitachi Astemo, Ltd., Hitachinaka-shi, Ibaraki 312-8503 (JP)
(72) Inventor: DOI Koji, Hitachinaka-shi Ibaraki 312-8503 (JP); OOTSUKA Yuuji, Hitachinaka-shi Ibaraki 312-8503 (JP); BETSUI Keiichi, Tokyo 100-8280 (JP)
(74) Representative: MERH-IP Matias Erny Reichl Hoffmann Patentanwälte PartG mbB
(86) International application number: PCT/JP2018/018654
(87) International publication number: WO 2018/225462

(56) References cited:
- WO-A1-2013/018743
- JP-A- 2009 067 084
- JP-A- 2009 298 344
- JP-A- 2012 222 533
- US-A1- 2009 067 184
- SUKTHANKAR R: "RACCOON: A Real-time Autonomous Car Chaser Operating Optimally At Night", INTELLIGENT VEHICLES '93 SYMPOSIUM TOKYO, JAPAN 14-16 JULY 1993, NEW YORK, NY, USA,IEEE, US, 14 July 1993 (1993-07-14), pages 37-42, XP010117248, ISBN: 978-0-7803-1370-5
- CHEM M-Y ET AL: "The lane recognition and vehicle detection at night for a camera-assisted car on highway", PROCEEDINGS / 2003 IEEE INTERNATIONAL CONFERENCE ON ROBOTICS AND AUTOMATION : SEPTEMBER 14 - 19, 2003, THE GRAND HOTEL, TAIPEI, TAIWAN; [PROCEEDINGS OF THE IEEE INTERNATIONAL CONFERENCE ON ROBOTICS AND AUTOMATION], IEEE SERVICE CENTER, PISCATAWAY, NJ, vol. 2, 14 September 2003 (2003-09-14), pages 2110-2115, XP010667148, ISBN: 978-0-7803-7736-3

## Description

### Technical Field

The present invention relates to an image processing device of a vehicle or the like.

### Background Art

Conventionally, an invention relating to an on-vehicle image processing system is known.

An image processing system described in PTL 1 includes imaging means mounted on a vehicle, and image analysis means for acquiring an image captured by this imaging means and analyzing the image. This image analysis means analyzes the image captured by the imaging means, and detects the position of a taillight of a preceding vehicle.

In the image processing system described above, first, red pixels are detected from the inside of the captured image, adjacent red pixels are connected, and an "element group" (= a light point) is created. Next, a tail lamp of a vehicle and the others (a reflector and the like) are discriminated from each other on the basis of a feature amount (the size of a rectangle, a maximum or minimum luminance, or the like) of the element group.
NPL 1 describes an approach for detecting taillights of a vehicle based on normalized red pixel values in an image.

### Citation List

### Patent Literature

PTL 1: JP 2014-232431 A

NPL 1 : SUKTHANKAR R: "RACCOON: A Real-time Autonomous Car Chaser Operating Optimally At Night", INTELLIGENT VEHICLES '93 SYMPOSIUM TOKYO, JAPAN 14-16 JULY 1993, NEW YORK, NY, USA,IEEE, US, 14 July 1993 (1993-07-14), pages 37-42, XPO10117248, ISBN: 978-0-7803-1370-5.

### Summary of Invention

### Technical Problem

The image processing system in the conventional technique described above has a problem in which an object having a color close to red, such as a reflector, is erroneously detected to be a taillight of a preceding vehicle.

In general, the following measures are taken to improve the precision of the detection of a taillight of a vehicle.
(1) A high-cost lens or imaging element is used, and color discrimination performance is improved. This is because, in the case of an inexpensive lens, in a case where an object having a color close to red, such as orange, is imaged, a phenomenon in which red is included may occur.
(2) A lamp that emits light having a color closer to white is used as a headlight of the local vehicle (an influence of a reflector is reduced).

However, both measures (1) and (2) described above increase a cost.

Accordingly, there is a need for a technique that enables the avoidance of erroneous detection by which an object having a color close to red is determined to be a taillight of a preceding vehicle, by using an inexpensive lens without using a lamp that emits light having a color closer to white.

In view of the problem described above, it is an object of the present invention to achieve an image processing device with which it is possible to identify a taillight with high precision without increasing a cost.

### Solution to Problem

In order to achieve the object described above, the present invention is configured as the following.

An image processing device includes the features of claim 1.

### Advantageous Effects of Invention

According to the present invention, an image processing device with which it is possible to identify a taillight with high precision can be achieved without increasing a cost.

### Brief Description of Drawings

[FIG. 1] FIG. 1 is a block diagram illustrating an entire configuration of an image processing device serving as Example 1 of the present invention.
[FIG. 2] FIG. 2 is a flowchart illustrating a processing procedure of the detection of a taillight in Example 1 of the present invention.
[FIG. 3] FIG. 3 is a flowchart illustrating a processing procedure of the detection of a taillight in Example 2 of the present invention.
[FIG. 4] FIG. 4 is a diagram illustrating the outline of light point detection processing in a technique that is different from the present invention.
[FIG. 5] FIG. 5 is a diagram for explaining problems in the technique illustrated in FIG. 4.
[FIG. 6] FIG. 6 is a diagram for explaining the principle of the present description.
[FIG. 7] FIG. 7 is a diagram illustrating the outline of light point detection processing according to the present invention.

### Description of Embodiments

An embodiment of the present invention is described below with reference to the attached drawings.

### Examples

Prior to the description of examples of the present invention, the principle of the present invention is described.

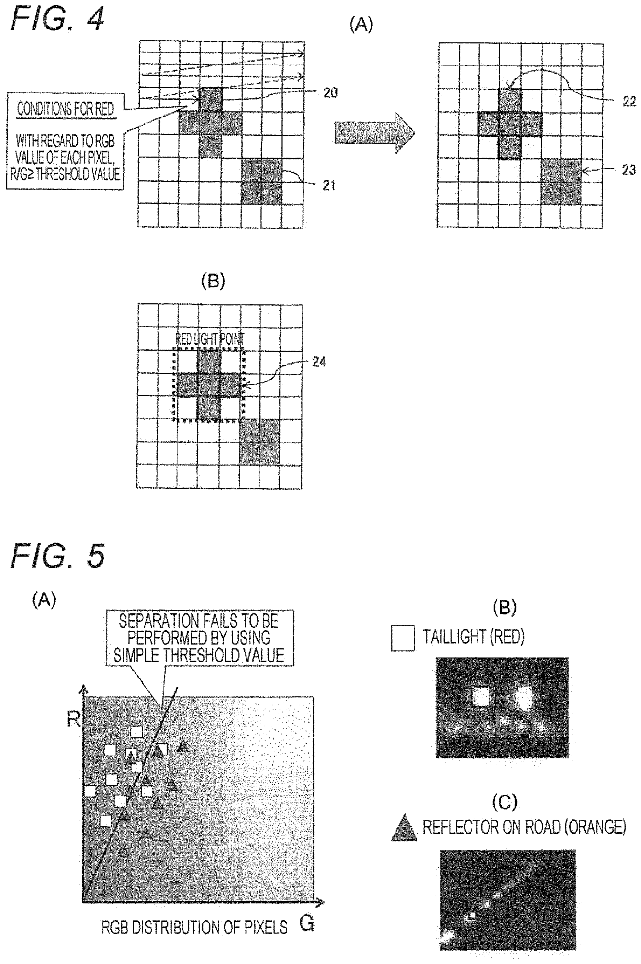

FIG. 4 is a diagram illustrating the outline of light point detection processing in a technique that is different from the present invention, and is a diagram for explaining a comparison with the present invention.

In (A) of FIG. 4, first, an image is captured, and red pixels 20 are detected. It is assumed that conditions for the detection of a red pixel is that, with respect to an RGB value of each pixel, R/G is at or above one prescribed threshold value. In (A) of FIG. 4, it is assumed that a red pixel is denoted by reference sign 20 and an orange pixel rather than a red pixel is denoted by reference sign 21. Then, a group 22 of a plurality of red pixels 20 adjacent to each other is determined. A group of a plurality of orange pixels 21 adjacent to each other is denoted by reference sign 23.

Next, as illustrated in (B) of FIG. 4, a rectangle (a broken line) 24 that surrounds the group 22 of red pixels is determined to be a red light point, and this is determined to be a taillight.

FIG. 5 is a diagram explaining problems in the technique illustrated in FIG. 4. (A) of FIG. 5 illustrates an RGB distribution of pixels. A vertical axis indicates R, and a horizontal axis indicates G. In addition, a square mark indicates a red pixel, and a triangle mark indicates an orange pixel.

As illustrated in (A) of FIG. 5, in a case where an inexpensive lens is used and a taillight or a reflector is imaged, an area exists where red pixels and orange pixels are mixed. It is difficult to separate a red pixel area from an orange pixel area by using a simple Threshold Value 25 of R/G.

If an expensive lens is used, the occurrence of such a problem can be suppressed, but this results in an increase in price, and this is not desirable.

In addition, if Threshold Value 25 is further increased, a probability of erroneously detecting a taillight illustrated in (B) of FIG. 5 to be a reflector, as illustrated in (C) of FIG. 5, decreases, but a detection rate in the detection of a taillight also decreases. This is because the number of pixels at or above the further increased Threshold Value 25 decreases.

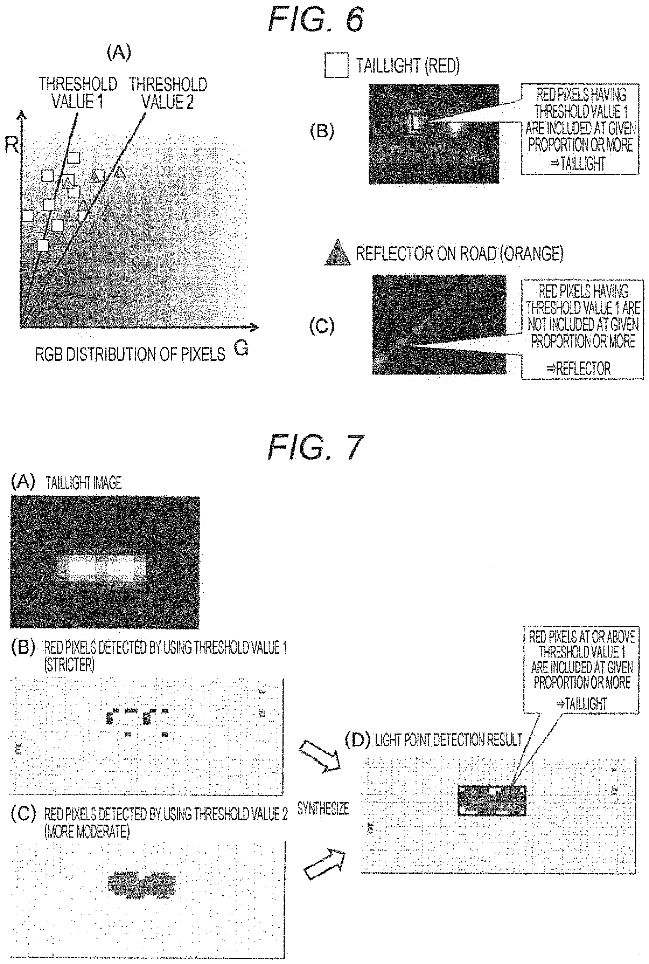

FIG. 6 is a diagram illustrating the outline of taillight determination processing in the principle of the present invention.

(A) of FIG. 6 is an RGB distribution map of pixels in which red pixels and orange pixels are mixed. A vertical axis in (A) of FIG. 6 indicates R, and a horizontal axis indicates G. In addition, a red pixel is indicated by a square mark, and an orange pixel is indicated by a triangle mark.

As illustrated in (A) of FIG. 6, Threshold Value 1 and Threshold Value 2 are set. Threshold Value 1 is a threshold value for detecting an area that only includes a red pixel, and Threshold Value 2 has a value of R/G that is smaller than a value of R/G of Threshold Value 1, and is a threshold value for detecting a pixel area that includes a red pixel and an orange pixel.

Then, in a pixel area at or above Threshold Value 2, in a case where the proportion of pixels at or above Threshold Value 1 is at or above a given value, the pixel area is determined to be a taillight, as illustrated in (B) of FIG. 6. This is because it can be considered that, if the pixel area is a taillight, red pixels and orange pixels are mixed and the proportion of red pixels has a given value (for example, 10% or more).

If the proportion of red pixels is below the given value, the pixel area is determined to be a reflector, as illustrated in (C) of FIG. 6. This is because it can be considered that, if the pixel area is a reflector, red pixels and orange pixels are mixed but the proportion of red pixels is below the given value (for example, less than 10%).

FIG. 7 is a diagram illustrating the outline of light point detection processing according to the present invention.

(A) of FIG. 7 is an image obtained by imaging a taillight, and red pixels are detected from this image by using Threshold Value 1 or above. A result of detecting red pixels by using Threshold Value 1 is illustrated in (B) of FIG. 7.

Next, red pixels are detected from the image illustrated in (A) of FIG. 7 by using Threshold Value 2. A result of detecting red pixels by using Threshold Value 2 is illustrated in (C) of FIG. 7. Threshold Value 1 is, for example, 4, and Threshold Value 2 is, for example, 2. In pixels at or above Threshold Value 2, red pixels and orange pixels are mixed.

Then, the result of detecting red pixels by using Threshold Value 1 and the result of detecting red pixels by using Threshold Value 2 are synthesized, and a light point, as illustrated in (D) of FIG. 7, is acquired. The proportion of pixels at or above Threshold Value 1 in a light point image illustrated in (D) of FIG. 7 is calculated. In a case where the calculated proportion is at or above a given value, the light point is determined to be a taillight, and in a case where the calculated proportion is below the given value, the light point is determined to be a reflector.

In the case of a reflector, red pixels tend to exist in the periphery (at an end) of the light point. Therefore, whether the light point is a reflector is determined on the basis of the positions of red pixels in the light point, and the light point can also be determined to be a taillight in a case where the light point is not a reflector.

The principle of the present invention has been described above, and examples based on this principle are described below.

### (Example 1)

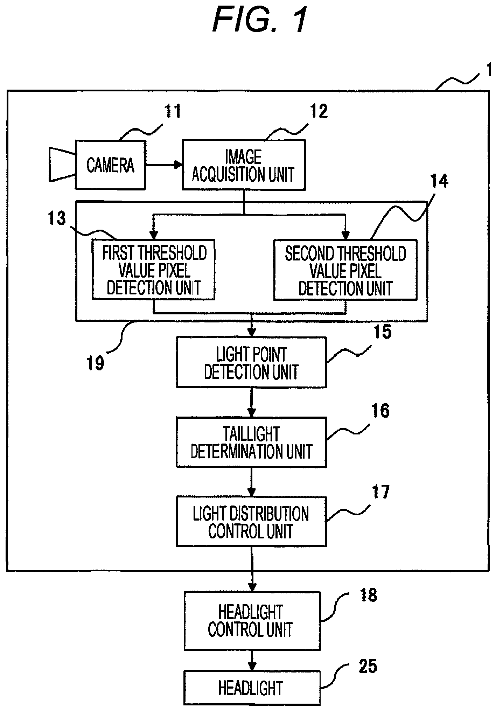

FIG. 1 is a block diagram illustrating an entire configuration of an image processing device serving as Example 1 of the present invention.

In FIG. 1, an image processing device 1 includes a camera (an imaging unit) 11 that images the outside, an image acquisition unit 12, a pixel detection unit 19, a light point detection unit 15, a taillight determination unit 16, and a light distribution control unit 17. The pixel detection unit 19 includes a first threshold value pixel detection unit 13 and a second threshold value pixel detection unit 14. A light distribution control signal from the light distribution control unit 17 is supplied to a headlight control unit 18.

The image acquisition unit 12 controls the camera 11 provided on a front side of a vehicle, and periodically performs the setting of exposure time and imaging.

The first threshold value pixel detection unit 13 and the second threshold value pixel detection unit 14 use a short exposure image acquired by the image acquisition unit 12 so as to detect pixels having a prescribed color that is included in the image.

The light point detection unit 15 detects a group (a light point) of red pixels and pixels having a color close to red by using pixel information that has been detected by the first threshold value pixel detection unit 13 and the second threshold value pixel detection unit 14.

In addition, the taillight determination unit 16 determines whether the detected light point is a taillight. The light distribution control unit 17 supplies a light distribution control signal of a headlight of the local vehicle to the headlight control unit on the basis of output data of the taillight determination unit 16. The headlight control unit 18 performs light distribution control such as high beams or low beams on the headlight (light source) 25 in accordance with the light distribution control signal from the light distribution control unit 17.

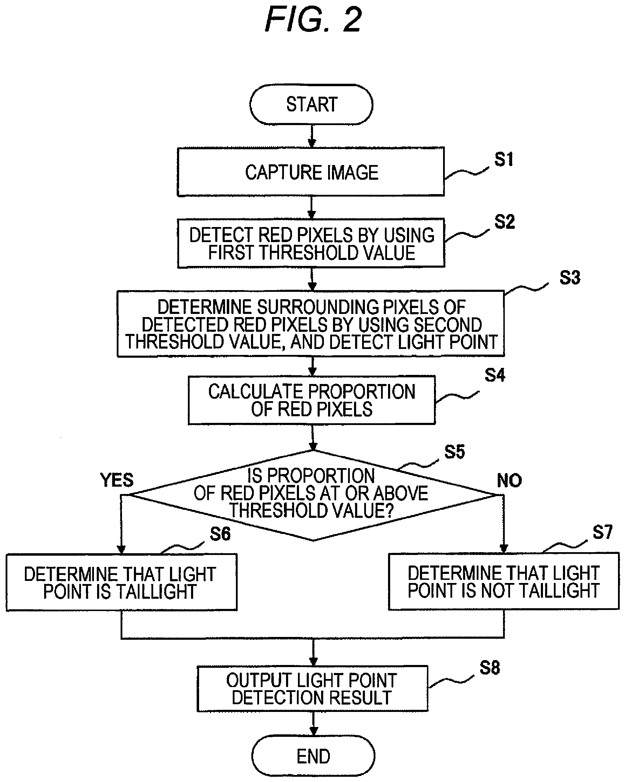

FIG. 2 is a flowchart illustrating a processing procedure of the detection of a taillight in Example 1 of the present invention. The flow of taillight detection processing is described below on the basis of the flowchart of FIG. 2.

In step S1 of FIG. 2, the image acquisition unit 12 sets the exposure time of an image to be captured next in the camera 11, and performs imaging at a prescribed timing.

In step S2, the first threshold value pixel detection unit 13 acquires an image captured in step S1, and detects pixels having a color to be determined by using a prescribed color threshold value (a first threshold value). Specifically, respective pixels in image data are scanned, and pixels are detected for which a ratio (R/G) of a red component (R) and a green component (G) is at or above the first threshold value (a threshold value indicating a degree of redness). The first threshold value is, for example, 4.

In step S3, the second threshold value (threshold value indicating a degree of redness) pixel detection unit 14 detects pixels having at least a second threshold value from surrounding pixels of red pixels that have been detected in step S2. Then, the light point detection unit 15 detects a light point from a result of detecting the pixels having at least the second threshold value.

Next, in step S4, the taillight determination unit 16 calculates the proportion of the number of pixels at or above the first threshold value in the light point detected in step S3, namely, the proportion of the number of red pixels with respect to the entire number of pixels in the light point.

Then, in step S5, the taillight determination unit determines whether the proportion of the number of red pixels that has been calculated in step S4 is at or above a taillight determination threshold value (for example, 10%).

In step S5, if the proportion of the number of red pixels is at or above the taillight determination threshold value, the processing moves on to step S6, and the taillight determination unit 16 determines that the light point is a taillight of a preceding vehicle, adds information indicating that the light point will be a target for light shielding, and performs an output to the light distribution control unit 17.

In step S5, in a case where the proportion of red pixels is not at or above the taillight determination threshold value, the processing moves on to step S7, and the taillight determination unit 16 determines that the light point is not a taillight but an object other than the taillight, adds information indicating that the light point will not be a target for light shielding, and performs an output to the light distribution control unit 17.

In step S7, it may be determined that the light point is a reflector without determining that the light point is an object other than a taillight, and information may be added that indicates that the light point will be excluded from a target for light shielding.

In step S8, the light distribution control unit 17 determines a light-shielded area of a headlight (a light source) of the local vehicle on the basis of the determination and the information that have been acquired in steps S6 and S7, generates a command signal that controls light distribution, transmits the command signal to the headlight control unit 18, and performs light distribution control (outputs a light point detection result).

The headlight control unit (a light source control unit) 18 controls the headlight 25 in accordance with the command signal from the light distribution control unit 17.

As a result of the above, one cycle of the taillight detection processing is completed.

Note that a light distribution control system can be configured by combining the image processing device 1 and the headlight control unit 18 that are illustrated in FIG. 1.

As described above, in Example 1 of the present invention, red pixels having at least a first threshold value are detected from a captured image, surrounding pixels with the detected red pixels as a reference point are determined by using a second threshold value that is smaller than the first threshold value so that a light point is detected, and the proportion of red pixels (the proportion of pixels at or above the first threshold value) in the detected light point is calculated. Then, it is determined whether the calculated proportion of red pixels is at or above a taillight determination threshold value, and if the calculated proportion is at or above the taillight determination threshold value, the light point is determined to be a taillight. If the calculated proportion is below the taillight determination threshold value, the light point is determined to be a light point other than a taillight.

Accordingly, an image processing device and a light distribution control system with which it is possible to identify a taillight with high precision can be achieved without using an expensive lens.

### (Example 2)

Next, Example 2 of the present invention is described.

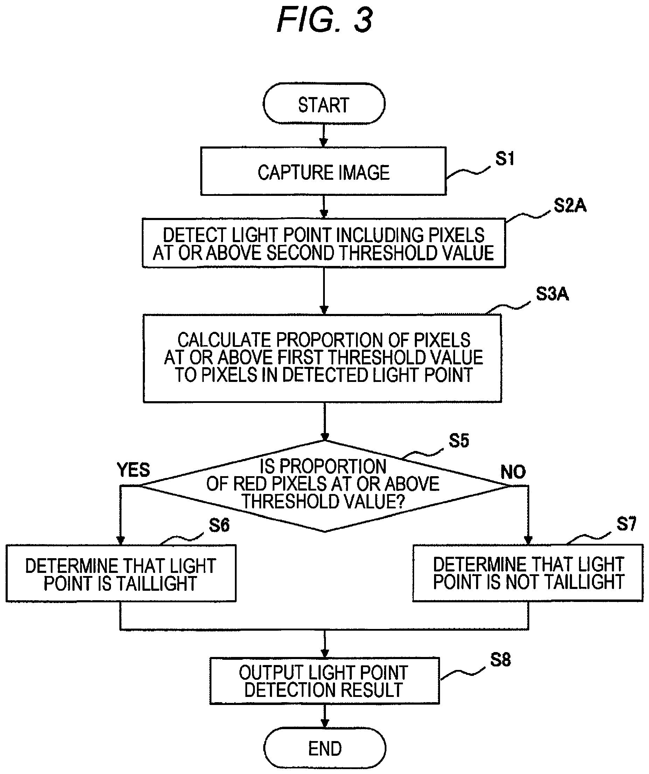

FIG. 3 is a flowchart illustrating a processing procedure of the detection of a taillight in Example 2 of the present invention.

Example 1 and Example 2 are different from each other in a processing procedure of the detection of a taillight, and are similar to each other in the other configuration. Therefore, it is assumed that the image processing device 1 illustrated in FIG.1 and the light distribution control system are common in Example 1 and Example 2.

In step S1 of FIG. 3, the image acquisition unit 12 sets the exposure time of an image to be captured next in the camera 11, and performs imaging at a prescribed timing.

In step S2A, the second threshold value pixel detection unit 14 acquires an image captured in step S1, and detects pixels having a color to be determined by using a prescribed color threshold value (a second threshold value). The light point detection unit 15 detects a light point including the detected pixels.

Specifically, respective pixels in image data are scanned, and pixels are detected for which a ratio (R/G) of a red component (R) and a green component (G) is at or above the second threshold value. From among the detected pixels, pixels within a prescribed distance between them on the image are connected as the same group, and an area occupied by a group of these pixels is regarded as a light point. In this step, a plurality of light points can be detected. The second threshold value is, for example, 2.

Next, in step S3A, the taillight determination unit 16 calculates the proportion of pixels at or above a first threshold value to pixels in the detected light point. In a case where a plurality of light points exists, the proportion of pixels at or above the first threshold value to pixels in a detected light point is calculated for each of the plurality of light points.

Next, in step S5, the taillight determination unit 16 determines whether the proportion of pixels at or above the first threshold value (red pixels) in each of the light points that has been calculated in step S3A is at or above a prescribed taillight determination threshold value (for example, 10%).

In step S5, if the proportion of red pixels is at or above the taillight determination threshold value, the processing moves on to step S6, and the taillight determination unit 16 determines that the light point is a taillight of a preceding vehicle, adds information indicating that the light point will be a target for light shielding, and performs an output to the light distribution control unit 17.

In step S5, in a case where the proportion of red pixels is not at or above the taillight determination threshold value, the processing moves on to step S7, and the taillight determination unit 16 determines that the light point is not a taillight but an object other than the taillight, adds information indicating that the light point will not be a target for light shielding, and performs an output to the light distribution control unit 17.

In step S7, similarly to Example 1, it may be determined that the light point is a reflector without determining that the light point is an object other than a taillight, and information may be added that indicates that the light point will be excluded from a target for light shielding.

In step S8, the light distribution control unit 17 determines a light-shielded area of a headlight (a light source) of the local vehicle on the basis of the determination and the information that have been acquired in steps S6 and S7, generates a command signal that controls light distribution, transmits the command signal to the headlight control unit 18, and performs light distribution control (outputs a light point detection result).

The headlight control unit 18 controls the headlight in accordance with a command signal from the light distribution control unit 17.

In step S8, the light distribution control unit 17 determines a light-shielded area of the headlight of the local vehicle on the basis of light point information that has been acquired in steps S6 and S7, and performs light distribution control.

As a result of the above, one cycle of the taillight detection processing is completed.

As described above, in Example 2 of the present invention, a single light point or a plurality of light points that includes pixels at or above a second threshold value is detected from a captured image, and the proportion of pixels at or above a first threshold value (red pixels) in a detected light point is calculated. Then, it is determined whether the calculated proportion of red pixels is at or above a taillight determination threshold value, and if the calculated proportion is at or above the taillight determination threshold value, the light point is determined to be a taillight. If the calculated proportion is below the taillight determination threshold value, the light point is determined to be a light point other than a taillight. In this case, the light point can be determined to be a reflector on a road.

Accordingly, similarly to Example 1, an image processing device and a light distribution control system with which it is possible to identify a taillight with high precision can be achieved without using an expensive lens.

In an example other than Example 1 and Example 2 described above, whether a detected light point is a taillight is determined on the basis of the positions of pixels at or above a first threshold value (red pixels) in the detected light point rather than the proportion of the pixels in the detected light point. In a case where a reflector on a road is imaged by using an inexpensive lens, red pixels tend to appear in an end part of an acquired light point (an outer peripheral part of the light point). In this case, it is determined that the light point is not a taillight.

In a processing flow in the case of this example, the calculation of the proportion of red pixels in step S4 of FIG. 2 or step S3A of FIG. 3 is replaced with "Calculate positions of red pixels", and "Is proportion of red pixels at or above threshold value?" in step S5 of FIG. 2 or FIG. 3 is replaced with "Are positions of red pixels located at end of light point?".

The calculation of the positions of red pixels and the determination of whether the positions of red pixels are located at an end of a light point are performed by the taillight determination unit 16.

Note that the examples described above are examples in a case where the present invention is applied to an image processing device and a light distribution control system that are mounted on a vehicle, but the present invention can be applied to others than a vehicle. For example, the present invention can be applied to an automobile monitoring device that monitors traffic volume, and a reflector on a road can be suppressed from being erroneously recognized as a taillight. Reference Signs List

- 1: image processing device
- 11: camera
- 12: image acquisition unit
- 13: first threshold value pixel detection unit
- 14: second threshold value pixel detection unit
- 15: light point detection unit
- 16: taillight determination unit
- 17: light distribution control unit
- 18: headlight control unit
- 19: pixel detection unit
- 20: red pixel
- 21: orange pixel
- 22: red pixel group
- 23: orange pixel group
- 24: red light point
- 25: headlight (light source)

## Claims

1. An image processing device comprising:
an imaging unit that images an outside;
an image acquisition unit (12) that acquires an image captured by the imaging unit;
a pixel detection unit (19) that detects pixels at or above a first threshold value and pixels at or above a second threshold value in the image acquired by the image acquisition unit (12), the first threshold value indicating a degree of redness, the second threshold value being smaller than the first threshold value;
a light point detection unit (15) that detects a light point from the pixels at or above the two threshold values, the pixels having been detected by the pixel detection unit (19); and
a taillight determination unit (16) that determines whether the light point is a taillight of a vehicle based on the pixels at or above the first threshold value and the pixels at or above the second threshold value that have been detected,
**characterized in that**
the first threshold and the second threshold are values of an R/G ratio.

2. The image processing device according to claim 1, wherein
the light point detection unit (15) determines the pixels at or above the second threshold value of surrounding pixels of the pixels at or above the first threshold value that have been detected by the pixel detection unit (19), and detects the light point, and
the taillight determination unit (16) calculates a proportion of a number of pixels at or above the first threshold value in the light point, and determines that the light point is the taillight of the vehicle if the proportion that has been calculated is at or above a predetermined taillight determination threshold value.

3. The image processing device according to claim 1, wherein
the light point detection unit (15) detects a light point that includes the pixels at or above the second threshold value that have been detected by the pixel detection unit (19), and
the taillight determination unit (16) calculates a proportion of a number of pixels at or above the first threshold value in the light point, and determines that the light point is the taillight of the vehicle if the proportion that has been calculated is at or above a predetermined taillight determination threshold value.

4. The image processing device according to claim 1, wherein
the light point detection unit (15) determines the pixels at or above the second threshold value of surrounding pixels of the pixels at or above the first threshold value that have been detected by the pixel detection unit (19), and detects the light point, and
the taillight determination unit (16) calculates positions of the pixels at or above the first threshold value in the light point, determines whether the positions of the pixels that have been calculated are located at an outer peripheral part of the light point, and determines that the light point is the taillight of the vehicle when the positions of the pixels that have been calculated are not located at the outer peripheral part of the light point.

5. The image processing device according to claim 1, wherein
the light point detection unit (15) detects a light point that includes the pixels at or above the second threshold value that have been detected by the pixel detection unit (19), and
the taillight determination unit (16) calculates positions of the pixels at or above the first threshold value in the light point, determines whether the positions of the pixels that have been calculated are located at an outer peripheral part of the light point, and determines that the light point is the taillight of the vehicle when the positions of the pixels that have been calculated are not located at the outer peripheral part of the light point.

6. The image processing device according to claim 1, wherein
the light point detection unit (15) determines the pixels at or above the second threshold value of surrounding pixels of the pixels at or above the first threshold value that have been detected by the pixel detection unit (19), and detects the light point, and
the taillight determination unit (16) calculates a proportion of a number of pixels at or above the first threshold value in the light point, and determines that the light point is a reflector on a road if the proportion that has been calculated is below a predetermined taillight determination threshold value.

7. The image processing device according to claim 1, wherein
the light point detection unit (15) detects a light point that includes the pixels at or above the second threshold value that have been detected by the pixel detection unit (19), and
the taillight determination unit (16) calculates a proportion of a number of pixels at or above the first threshold value in the light point, and determines that the light point is a reflector on a road if the proportion that has been calculated is below a predetermined taillight determination threshold value

8. The image processing device according to claim 1, further comprising a light distribution control unit (17) that generates a command that controls light distribution in accordance with a determination result of the taillight determination unit (16); and
a light source control unit (18) that controls a light source (25) in accordance with a command signal from the light distribution control unit (17).

## Patentansprüche

1. Bildverarbeitungsvorrichtung, die Folgendes umfasst:
eine Bildgebungseinheit, die eine Außenseite abbildet;
eine Bilderfassungseinheit (12), die ein Bild erfasst, das durch die Bildgebungseinheit aufgenommen wird;
eine Pixeldetektionseinheit (19), die Pixel bei oder über einem ersten Schwellenwert und Pixel bei oder über einem zweiten Schwellenwert in dem Bild, das durch die Bilderfassungseinheit (12) erfasst wird, detektiert, wobei der erste Schwellenwert einen Rötegrad angibt und wobei der zweite Schwellenwert kleiner als der erste Schwellenwert ist;
eine Lichtpunkt-Detektionseinheit (15), die aus den Pixeln bei oder über den zwei Schwellenwerten einen Lichtpunkt detektiert, wobei die Pixel durch die Pixeldetektionseinheit (19) detektiert worden sind; und
eine Rücklicht-Bestimmungseinheit (16), die auf der Grundlage der Pixel bei oder über dem ersten Schwellenwert und der Pixel bei oder über dem zweiten Schwellenwert, die detektiert worden sind, bestimmt, ob der Lichtpunkt ein Rücklicht eines Fahrzeugs ist,
**dadurch gekennzeichnet, dass**
der erste Schwellenwert und der zweite Schwellenwert Werte eines R/G-Verhältnisses sind.

2. Bildverarbeitungsvorrichtung nach Anspruch 1, wobei
die Lichtpunkt-Detektionseinheit (15) die Pixel bei oder über dem zweiten Schwellenwert von umgebenden Pixeln der Pixel bei oder über dem ersten Schwellenwert, die durch die Pixeldetektionseinheit (19) detektiert worden sind, bestimmt und den Lichtpunkt detektiert, und
die Rücklicht-Bestimmungseinheit (16) einen Anteil einer Anzahl von Pixeln bei oder über dem ersten Schwellenwert in dem Lichtpunkt berechnet und bestimmt, dass der Lichtpunkt das Rücklicht des Fahrzeugs ist, wenn der Anteil, der berechnet worden ist, bei oder über einem vorgegebenen Rücklichtbestimmungs-Schwellenwert liegt.

3. Bildverarbeitungsvorrichtung nach Anspruch 1, wobei
die Lichtpunkt-Detektionseinheit (15) einen Lichtpunkt detektiert, der die Pixel bei oder über dem zweiten Schwellenwert enthält, die durch die Pixeldetektionseinheit (19) detektiert worden sind, und
die Rücklicht-Bestimmungseinheit (16) einen Anteil einer Anzahl von Pixeln bei oder über dem ersten Schwellenwert in dem Lichtpunkt berechnet und bestimmt, dass der Lichtpunkt das Rücklicht des Fahrzeugs ist, wenn der Anteil, der berechnet worden ist, bei oder über einem vorgegebenen Rücklichtbestimmungs-Schwellenwert liegt.

4. Bildverarbeitungsvorrichtung nach Anspruch 1, wobei
die Lichtpunkt-Detektionseinheit (15) die Pixel bei oder über dem zweiten Schwellenwert von umgebenden Pixeln der Pixel bei oder über dem ersten Schwellenwert, die durch die Pixeldetektionseinheit (19) detektiert worden sind, bestimmt und den Lichtpunkt detektiert, und
die Rücklicht-Bestimmungseinheit (16) Positionen der Pixel bei oder über dem ersten Schwellenwert in dem Lichtpunkt berechnet, bestimmt, ob die Positionen der Pixel, die berechnet worden sind, an einem Außenumfangsabschnitt des Lichtpunktes angeordnet sind, und bestimmt, dass der Lichtpunkt das Rücklicht des Fahrzeugs ist, wenn die Positionen der Pixel, die berechnet worden sind, nicht am Außenumfangsabschnitt des Lichtpunktes angeordnet sind.

5. Bildverarbeitungsvorrichtung nach Anspruch 1, wobei
die Lichtpunkt-Detektionseinheit (15) einen Lichtpunkt detektiert, der die Pixel bei oder über dem zweiten Schwellenwert enthält, die durch die Pixeldetektionseinheit (19) detektiert worden sind, und
die Rücklicht-Bestimmungseinheit (16) Positionen der Pixel bei oder über dem ersten Schwellenwert in dem Lichtpunkt berechnet, bestimmt, ob die Positionen der Pixel, die berechnet worden sind, an einem Außenumfangsabschnitt des Lichtpunktes angeordnet sind, und bestimmt, dass der Lichtpunkt das Rücklicht des Fahrzeugs ist, wenn die Positionen der Pixel, die berechnet worden sind, nicht am Außenumfangsabschnitt des Lichtpunktes angeordnet sind.

6. Bildverarbeitungsvorrichtung nach Anspruch 1, wobei
die Lichtpunkt-Detektionseinheit (15) die Pixel bei oder über dem zweiten Schwellenwert von umgebenden Pixeln der Pixel bei oder über dem ersten Schwellenwert, die durch die Pixeldetektionseinheit (19) detektiert worden sind, bestimmt und den Lichtpunkt detektiert, und
die Rücklicht-Bestimmungseinheit (16) einen Anteil einer Anzahl von Pixeln bei oder über dem ersten Schwellenwert in dem Lichtpunkt berechnet und bestimmt, dass der Lichtpunkt ein Reflektor auf einer Straße ist, wenn der Anteil, der berechnet worden ist, unter einem vorgegebenen Rücklichtbestimmungs-Schwellenwert liegt.

7. Bildverarbeitungsvorrichtung nach Anspruch 1, wobei
die Lichtpunkt-Detektionseinheit (15) einen Lichtpunkt detektiert, der die Pixel bei oder über dem zweiten Schwellenwert enthält, die durch die Pixeldetektionseinheit (19) detektiert worden sind, und
die Rücklicht-Bestimmungseinheit (16) einen Anteil einer Anzahl von Pixeln bei oder über dem ersten Schwellenwert in dem Lichtpunkt berechnet und bestimmt, dass der Lichtpunkt ein Reflektor auf einer Straße ist, wenn der Anteil, der berechnet worden ist, unter einem vorgegebenen Rücklichtbestimmungs-Schwellenwert liegt.

8. Bildverarbeitungsvorrichtung nach Anspruch 1, die ferner eine Lichtverteilungs-Steuereinheit (17), die einen Befehl erzeugt, der eine Lichtverteilung in Übereinstimmung mit einem Bestimmungsergebnis der Rücklicht-Bestimmungseinheit (16) steuert; und
eine Lichtquellen-Steuereinheit (18), die eine Lichtquelle (25) in Übereinstimmung mit einem Befehlssignal von der Lichtverteilungs-Steuereinheit (17) steuert, umfasst.

## Revendications

1. Dispositif de traitement d'image comprenant :
une unité d'imagerie qui image un environnement extérieur ;
une unité d'acquisition d'image (12) qui acquiert une image capturée par l'unité d'imagerie ;
une unité de détection de pixels (19) qui détecte des pixels à une première valeur seuil ou au-dessus et des pixels à une seconde valeur seuil ou au-dessus dans l'image acquise par l'unité d'acquisition d'image (12), la première valeur seuil indiquant un degré de rougeur, la seconde valeur seuil étant plus petite que la première valeur seuil ;
une unité de détection de point de lumière (15) qui détecte un point de lumière à partir des pixels aux deux valeurs seuils ou au-dessus, les pixels ayant été détectés par l'unité de détection de pixels (19) ; et
une unité de détermination de feu arrière (16) qui détermine si le point de lumière est un feu arrière d'un véhicule sur la base des pixels à la première valeur seuil ou au-dessus et sur la base des pixels à la seconde valeur seuil ou au-dessus qui ont été détectés,
**caractérisé en ce que**
la première valeur seuil et la seconde valeur seuil sont des valeurs d'un rapport R/G.

2. Dispositif de traitement d'image selon la revendication 1, dans lequel
l'unité de détection de point de lumière (15) détermine les pixels à la seconde valeur seuil ou au-dessus de la seconde valeur seuil de pixels environnants des pixels à la première valeur seuil ou au-dessus de la première valeur seuil qui ont été détectés par l'unité de détection de pixels (19), et détecte le point de lumière, et
l'unité de détermination de feu arrière (16) calcule une proportion d'un nombre de pixels à la première valeur seuil ou au-dessus dans le point de lumière, et détermine que le point de lumière est le feu arrière du véhicule si la proportion qui a été calculée est à une valeur seuil de détermination de feu arrière prédéterminée ou au-dessus.

3. Dispositif de traitement d'image selon la revendication 1, dans lequel
l'unité de détection de point de lumière (15) détecte un point de lumière qui inclut les pixels à la seconde valeur seuil ou au-dessus qui ont été détectés par l'unité de détection de pixels (19), et
l'unité de détermination de feu arrière (16) calcule une proportion d'un nombre de pixels à la première valeur seuil ou au-dessus dans le point de lumière, et détermine que le point de lumière est le feu arrière du véhicule si la proportion qui a été calculée est à une valeur seuil de détermination de feu arrière prédéterminée ou au-dessus.

4. Dispositif de traitement d'image selon la revendication 1, dans lequel
l'unité de détection de point de lumière (15) détermine les pixels à la seconde valeur seuil ou au-dessus de la seconde valeur seuil de pixels environnants des pixels à la première valeur seuil ou au-dessus de la première valeur seuil qui ont été détectés par l'unité de détection de pixels (19), et détecte le point de lumière, et
l'unité de détermination de feu arrière (16) calcule des positions des pixels à la première valeur seuil ou au-dessus dans le point de lumière, détermine si les positions des pixels qui ont été calculées sont situées au niveau d'une partie périphérique extérieure du point de lumière, et détermine que le point de lumière est le feu arrière du véhicule quand les positions des pixels qui ont été calculées ne sont pas situées au niveau de la partie périphérique extérieure du point de lumière.

5. Dispositif de traitement d'image selon la revendication 1, dans lequel
l'unité de détection de point de lumière (15) détecte un point de lumière qui inclut les pixels à la seconde valeur seuil ou au-dessus qui ont été détectés par l'unité de détection de pixels (19), et
l'unité de détermination de feu arrière (16) calcule des positions des pixels à la première valeur seuil ou au-dessus dans le point de lumière, détermine si les positions des pixels qui ont été calculées sont situées au niveau d'une partie périphérique extérieure du point de lumière, et détermine que le point de lumière est le feu arrière du véhicule quand les positions des pixels qui ont été calculées ne sont pas situées au niveau de la partie périphérique extérieure du point de lumière.

6. Dispositif de traitement d'image selon la revendication 1, dans lequel
l'unité de détection de point de lumière (15) détermine les pixels à la seconde valeur seuil ou au-dessus de la seconde valeur seuil de pixels environnants des pixels à la première valeur seuil ou au-dessus de la première valeur seuil qui ont été détectés par l'unité de détection de pixels (19), et détecte le point de lumière, et
l'unité de détermination de feu arrière (16) calcule une proportion d'un nombre de pixels à la première valeur seuil ou au-dessus dans le point de lumière, et détermine que le point de lumière et un réflecteur sur une route si la proportion qui a été calculée est en dessous d'une valeur seuil de détermination de feu arrière prédéterminée.

7. Dispositif de traitement d'image selon la revendication 1, dans lequel
l'unité de détection de point de lumière (15) détecte un point de lumière qui inclut les pixels à la seconde valeur seuil ou au-dessus qui ont été détectés par l'unité de détection de pixels (19), et
l'unité de détermination de feu arrière (16) calcule une proportion d'un nombre de pixels à la première valeur seuil ou au-dessus dans le point de lumière, et détermine que le point de lumière est un réflecteur sur une route si la proportion qui a été calculée et en dessous d'une valeur seuil de détermination de feu arrière.

8. Dispositif de traitement d'image selon la revendication 1, comprenant en outre une unité de commande de distribution de lumière (17) qui génère un ordre qui commande une distribution de lumière en accord avec un résultat de détermination de l'unité de détermination de feu arrière (16) ; et
une unité de commande de source de lumière (18) qui commande une source de lumière (25) en accord avec un signal d'ordre provenant de l'unité de commande de distribution de lumière (17).
